# EUROPÄISCHE PATENTANMELDUNG

(11) **EP 0 554 680 A1**
(43) Veröffentlichungstag der Anmeldung: **11.08.1993**
(21) Anmeldenummer: 93100449.3
(22) Anmeldetag: 14.01.1993
(51) Int. Cl.: A47G 21/00, A47J 43/28

(54) **Handbetätigtes Gerät, insbesondere zur Verwendung in Küche und Haushalt**

(30) Priorität: 06.02.1992 DE 9201449 U
(71) Anmelder: GEBRÜDER FUNKE KG, D-59832 Sundern (DE)
(72) Erfinder: Funke, Peter, W-5768 Sundern/Sauerland (DE)
(74) Vertreter: Patentanwälte Ostriga & Sonnet

(57) **Zusammenfassung**

Ein handbetätigtes Gerät (10), insbesondere zur Verwendung in Küche und Haushalt, mit einem Funktionsteil (11) und einem schlanken, stangenartigen Griffteil (12) ist hinsichtlich Handhabbarkeit und Griffgefühl dadurch verbessert worden, daß der Griffteil (12) einen an ihm längsverschieblich einstellbar gelagerten Tastkörper (15) trägt, dessen Durchmesser bzw. Breite den einer Griffteilstange (13) überschreitet. Dadurch wird im wesentlichen erreicht, daß der Tastkörper (15) aufgrund seiner relativen Größe zu der bzw. den dünnen Griffstange(n) (13) den tastbaren Bereich des Griffteils (12) an jeder wählbaren Stelle vergrößert. So kann er zum freien Griffteilende (14) geschoben werden, um besonders gut in der umgreifenden Hand zu liegen, oder weiter zum Funktionsteil (11) des Gerätes (Gabelzinken, Messerklinge, Spatel od. dgl.) hin, um auf den relativ großflächigen Tastkörper (15) mit einem Finger oder dem Daumen gezielt und sicher funktionsgerechten Druck ausüben zu können.

## Beschreibung

Die Erfindung bezieht sich auf ein handbetätigtes Gerät, insbesondere zur Verwendung in Küche und Haushalt, mit einem Funktionsteil und einem schlanken, stangenartigen Griffteil.

Geräte dieser Art sind als Eßbestecke oder auch als Küchengeräte in Gestalt von Pfannenwendern, Kartoffelstampfern u. dgl. in zwei grundsätzlichen Ausführungen bekannt. Bei der einen besteht der Griffteil aus einer einzigen, recht dünnen Stange. Die andere Grundform weist einen insbesondere aus Draht U-förmig gebogenen Griffteil aus, wobei die Schenkel des Bügels zueinander parallel verlaufende Stangen ausbilden. Geräte mit einem solcherart ausgestalteten Griffteil erfreuen sich aufgrund ihres eleganten Erscheinungsbildes großer Beliebtheit. Wenngleich die Griffteile also das ästhetische Formempfinden des Benutzers sehr positiv ansprechen, folgen sie nicht dem besten und wichtigsten aller Design-Grundsätze (form follows function), denn diese außerordentlich gewöhnungsbedürftigen Griffteile bleiben auch nach längerem Gebrauch haptisch unbefriedigend.

Der Erfindung liegt deshalb die Aufgabe zugrunde, ein Gerät der vorausgesetzten Art unter Beachtung und Beibehaltung seiner ästhetisch gelungenen Ausdruckskraft mit einfachen Mitteln so zu gestalten, daß Handhabbarkeit und Griffgefühl deutlich verbessert werden.

Ein diesem Bedürfnis in jeder Beziehung entsprechendes Gerät ist erfindungsgemäß dadurch gekennzeichnet, daß der Griffteil einen an ihm längsverschieblich einstellbar gelagerten Tastkörper trägt, dessen Durchmesser bzw. Breite den einer Griffteilstange überschreitet.

Der verstellbare Tastkörper beeinträchtigt das bekannte, gelungene Design in keiner Weise negativ, setzt im Gegenteil noch einen besonderen Akzent. Aufgrund seiner relativen Größe zu der bzw. den dünnen Griffstange(n) vergrößert der Tastkörper den tastbaren Bereich des Griffteils an jeder wählbaren Stelle. So kann er zum freien Griffteilende geschoben werden, um besonders gut in der umgreifenden Hand zu liegen, oder weiter zum Funktionsteil des Gerätes (Gabelzinken, Messerklinge, Spatel od. dgl.) hin, um auf den relativ großflächigen Tastkörper mit einem Finger oder dem Daumen gezielt und sicher funktionsgerechten Druck ausüben zu können. Je nach dem Gewicht des Tastkörpers kann im übrigen die Balance zwischen Griff- und Funktionsteil eingestellt und optimiert bzw. den persönlichen Wünschen angepaßt werden.

Weitere vorteilhafte und zweckmäßige Ausgestaltungen und Weiterbildungen des erfindungsgemäßen Geräts sind in den Unteransprüchen angegeben. Sie verstehen sich im übrigen aus der nachfolgenden Beschreibung der Erfindung anhand einer in den Zeichnungen wiedergegeben Ausführungsform in Gestalt eines Pfannenwenders. In den Zeichnungen zeigen:
- Fig. 1: ein Gerät mit verstellbarem Tastkörper in Aufsicht,
- Fig. 2: dasselbe Gerät in Seitenansicht und
- Fig. 3: einen Querschnitt durch den Griffteil entsprechend der Schnittangabe III-III in Fig. 1.

Das insgesamt mit 10 bezeichnete Gerät ist im gezeigten Ausführungsbeispiel ein Pfannenwender mit einem spachtelartigen Funktionsteil 11 und einem Griffteil 12. Dieser besteht aus Edelstahldraht von etwa 4 bis 6 mm Durchmesser und ist - wie ersichtlich - zu einem U-förmigen Bügel gebogen. So bilden die zueinander parallel verlaufenden Bügelschenkel zwei Griffteilstangen 13, die mit dem griffendseitig angeordneten Umbiegung 14 von 180^{o} miteinander verbunden sind. Die jeweils freien Schenkelenden der Griffteilstangen 13 sind am Funktionsteil 11 befestigt. Ein Gerät der bislang beschriebenen Art ist bekannt und aufgrund insbesondere des gelungen Griffteil-Designs sehr beliebt.

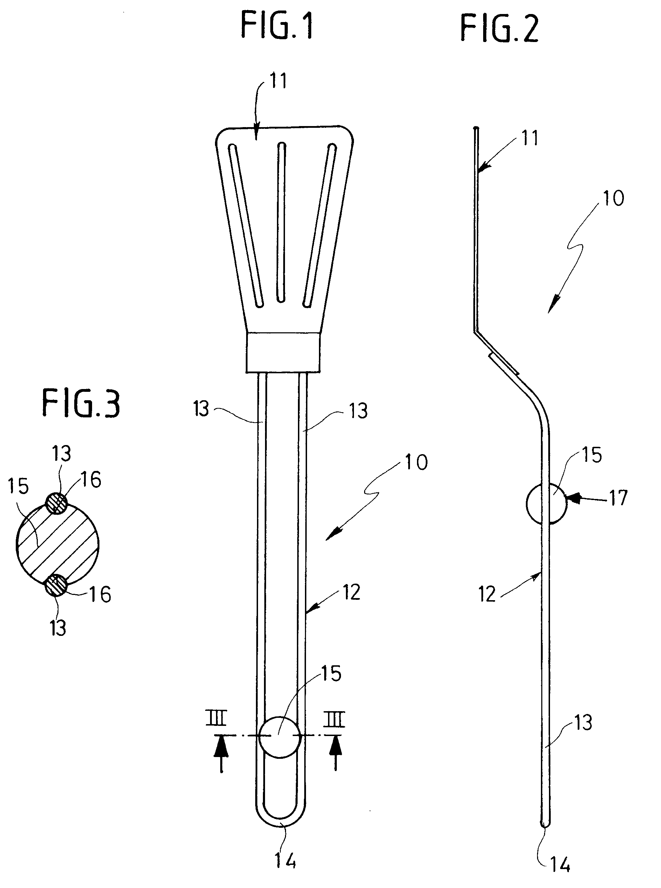

Die Besonderheit besteht nun darin, daß der Griffteil 12 einen an ihm längsverschieblich einstellbar gelagerten Tastkörper 15 trägt, dessen Durchmesser bzw. Breite den einer Griffteilstange 13 überschreitet. Beim Ausführungsbeispiel ist der Tastkörper 15 zwischen die beiden Griffteilstangen 13 eingespannt und einerseits mittels seitlichen Führungsrinnen 16 entsprechend Fig. 3 formschlüssig und also auch unverdrehbar, sowie aufgrund der federelastischen Eigenschaften der Griffteilstangen 13 kraft- bzw. klemmschlüssig gehalten. Hieraus resultiert auch der Vorteil, daß sich durch vorübergehend Auseinanderspreizen der Griffteilstangen 13 in ihrem mittleren Bereich der Tastkörper 15 auf Wunsch leicht entfernen und bei Bedarf auch wieder einsetzen läßt.

Wichtig ist, daß der Tastkörper 15 nicht allein aufgrund seiner Gewichtskraft entlang dem Griffteil 12 verlagerbar ist, sondern daß er, einmal in die bedarfsentsprechend Lage verbracht, dort bis zu einer weiteren Verstellung sicher verbleibt. Damit er jedoch auf einfache Weise möglichst mit nur einem Finger oder dem Daumen verschoben werden kann, ist es wichtig, daß die Klemm- bzw. Reibschlußkräfte, die ihn am Griffteil halten, nicht zu hoch sind.

Fig. 1 zeigt eine Stellung des Tastkörpers 15, die man bevorzugt wählen wird, wenn es darum geht, das Gerät 10 am hinteren Ende des Griffteils 11 besonders griffgünstig mit der Faust umschließen zu wollen. Die in Fig. 2 dargestellte Position des Tastkörpers 15 nahe dem Funktionsteil 11 ist demgegenüber besonders günstig, wenn bei der Arbeit mit dem Gerät 10 ein erhöhter Druck auf das Funktionsteil 11 etwa in Richtung des Pfeiles 17 auszuüben ist. Der drückende Daumen findet auf dem Tastkörper eine sicherere Auflage als an den Griffteilstangen 13 oder gar zwischen ihnen. Sollte hingegen ein Ergreifen des Geräts 10 etwa mittig des Griffteils 12 gewünscht sein, so kann man den Tastkörper 15 einfach an die dazu bestimmte Stelle schieben.

Der Tastkörper 15 besteht vorzugsweise aus Edelstahl und hat die Form einer Kugel. Bei einem Durchmesser der Griffteilstangen 13 von ca. 4-5 mm hat sich ein Tastkörperdurchmesser von etwa 20 mm als sehr angenehm und funktionsgerecht erwiesen.

Wenngleich die gewählte Kugelform für den Tastkörper 15 formell und funktionell als besonders ansprechend und günstig empfunden wird, ist im Rahmen der Erfindung selbstverständlich auch eine andere Formgebung möglich. So könnte man insbesondere daran denken, einen flachen Tastkörper vorzusehen, dem im wesentlichen die Aufgabe zufällt, den Zwischenraum zwischen den zueinander parallel verlaufenden Griffteilstangen 13 zu überbrücken, ohne wesentlich aus der von ihnen definierten Ebene hervorzuragen.

## Patentansprüche

1. Handbetätigtes Gerät, insbesondere zur Verwendung in Küche und Haushalt, mit einem Funktionsteil und einem schlanken, stangenartigen Griffteil, dadurch gekennzeichnet, daß der Griffteil (12) einen an ihm längsverschieblich einstellbar gelagerten Tastkörper (15) trägt, dessen Durchmesser bzw. Breite den einer Griffteilstange (13) überschreitet.

2. Gerät nach Anspruch 1, dadurch gekennzeichnet, daß der Tastkörper (15) form- und/oder klemmschlüssig entlang dem Griffteil (12) geführt ist.

3. Gerät nach Anspruch 1 oder 2 mit einem aus zwei parallelen Stangen (13) gebildeten Griffteil (12), dadurch gekennzeichnet, daß der Tastkörper (15) mittels der Eigenfederspannung der Stangen (13) kraftschlüssig zwischen ihnen geführt ist.

4. Gerät nach Anspruch 3, dadurch gekennzeichnet, daß der Tastkörper (15) seitliche Führungsmulden (16) zum formschlüssigen Kontakt mit den Stangen (13) aufweist.

5. Gerät nach Anspruch 1 oder einem der folgenden, dadurch gekennzeichnet, daß der Tastkörper (15) zumindest annähernd die Gestalt einer Kugel aufweist.

6. Gerät nach Anspruch 5, dadurch gekennzeichnet, daß die Kugel des Tastkörper (15) einen Durchmesser von wenigstens angenähert etwa 20 mm aufweist.

7. Gerät nach Anspruch 1 oder einem der folgenden, dadurch gekennzeichnet, daß der Tastkörper (15) aus Stahl, insbesondere Edelstahl besteht.
